(19) Europäisches Patentamt
European Patent Office
Office européen des brevets

(11) **EP 1 442 591 B1**

(12) **EUROPEAN PATENT SPECIFICATION**

(45) Date of publication and mention
of the grant of the patent:
**22.07.2009 Bulletin 2009/30**

(51) Int Cl.:
*H04N 5/208* (2006.01)    *H04N 5/14* (2006.01)

(21) Application number: **02772742.9**

(22) Date of filing: **14.10.2002**

(86) International application number:
**PCT/IB2002/004223**

(87) International publication number:
**WO 2003/036943 (01.05.2003 Gazette 2003/18)**

(54) **POLYPHASE FILTER COMBINING VERTICAL PEAKING AND SCALING IN PIXEL-PROCESSING ARRANGEMENT**

VERTIKALE ANHEBUNG UND SKALIERUNG KOMBINIERENDES POLYPHASENFILTER IN EINER PIXELVERARBEITUNGSVORRICHTUNG

FILTRE POLYPHASE COMBINANT LA COMPENSATION ET LA MISE A L'ECHELLE VERTICALES D'AGENCEMENT DE TRAITEMENT DE PIXELS

(84) Designated Contracting States:
**AT BE BG CH CY CZ DE DK EE ES FI FR GB GR IE IT LI LU MC NL PT SE SK TR**

(30) Priority: **26.10.2001 US 46515**

(43) Date of publication of application:
**04.08.2004 Bulletin 2004/32**

(73) Proprietor: **NXP B.V.**
**5656 AG Eindhoven (NL)**

(72) Inventors:
• **LIN, Chien-Hsin**
**NL-5656 AA Eindhoven (NL)**
• **YEH, Bryan, L-D.**
**NL-5656 AA Eindhoven (NL)**

(74) Representative: **Williamson, Paul Lewis et al**
**NXP Semiconductors UK Ltd.**
**Intellectual Property Department**
**Betchworth House**
**Station Road**
**Redhill**
**Surrey RH1 1DL (GB)**

(56) References cited:
**WO-A-01/45389**          **US-A- 5 422 827**
**US-A- 5 892 695**        **US-B1- 6 281 873**

EP 1 442 591 B1

**Description**

FIELD OF THE INVENTION

The present invention is directed to video signal processing and, more particularly, to video signal processing which employs a vertical pixel signal processing block, such as a polyphase filter.

BACKGROUND

Computer arrangements, including microprocessors and digital signal processors, have been designed for a wide range of applications and have been used in virtually every industry. For a variety of reasons, many of these applications have been directed to processing video data and have demanded minimal levels of power consumption and compactness. Some applications have further demanded a high-speed computing engine that can perform effectively on a real-time or near real-time basis. Many of these video-processing applications have required a data-signal processing circuit that is capable of performing multiple functions at ever-increasing speeds.

Increasing the power and versatility of such computing engines, however, can undermine other important goals. For example, faster computing engines consume more power and circuit real estate, whereas the ideal engine minimizes both power consumption and the amount of circuitry required to implement the computing engine.

Moreover, providing versatility and high power typically exacerbates the circuit real estate problem by requiring various types of processing circuitry, each specialized and selectively activated for different processing functions. This phenomena can be appreciated when comparing, for instance, relatively-slow general-purpose processing in video applications versus specialized video-signal filter processing used for compressing and decompressing video data in real time. Because the specialized processing circuitry is typically optimized to keep up with the real-time speeds of the video data, it is often difficult to provide a single video-data processing circuit that is adequately versatile without providing seemingly excess circuitry useful only for limited applications.

Many video-signal processing applications employ specialized video-signal filters for vertical signal processing. Vertical signal processing consists of two operations, vertical peaking and vertical scaling. Vertical peaking involves processing pixel data to compensate for information lost due to up-sampling conversion, and a peaking filter enhances the sharpness impression for vertical details in video images. Vertical scaling involves processing pixel data, using a specialized video-data filter known as a "polyphase" filter to perform sample rate conversion to resize images by manipulating pixel data stored to represent the horizontal and vertical lines used to refresh the display. In such applications, expansion or up-sampling ("zoom-factor" greater than one) conversion is achieved by increasing the ratio of the number of output pixels to the number of input pixels; whereas, compression or down-sampling ("zoom-factor" less than one) conversion is achieved by decreasing the ratio of the number of output pixels to the number of input pixels. For video-data expansion, a polyphase filter typically receives the data representing multiple pixels at a first rate (*e.g.*, two pixels per cycle), and processes the pixel data by circulating it through line buffers as a function of the scaling factor. The line buffers are adapted to decouple the incoming pixel data, which can be received at rate different than the rate at which the polyphase filter processes the data (*e.g.*, one pixel per cycle).

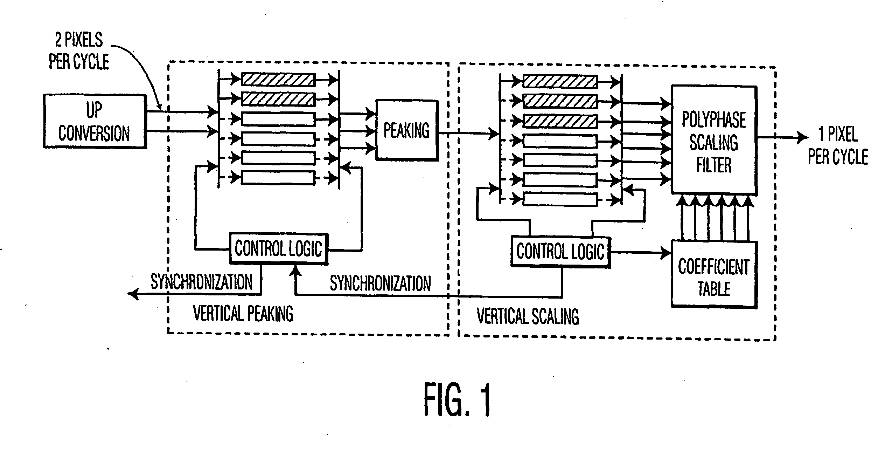

FIG. 1 illustrates a conventional vertical signal processing arrangement having a vertical peaking circuit and a vertical scaling circuit arranged in cascade. Such a conventional arrangement is also described in US-A-5 422 827. An up conversion unit, having an output rate of 2 pixels per cycle, provides pixel data to a vertical peaking circuit for processing. Several line buffers are available to hold and de-couple pixel data for the vertical peaking circuit's pixel data input rate. For example, received pixel data is decoupled by double-buffering the data in the first two buffer lines. In a specific example, the length of each line buffer is adequate for storing pixel data corresponding to 128 pixels, and two lines of pixels are used to start the vertical peaking process thereby providing a pixel latency of 128 cycles. The vertical peaking circuit uses a 3-tap filter, functionally [-c 1+2c-c] where c is programmable. By adjusting the value of "c," the peaking filter manipulates the pixel data to produce image sharpening or blurring. The peaking filter processes 3 buffer lines of pixel data, 2 lines holding circuit input data and the other line holding data from mirroring operations. The output rate of the vertical peaking circuit is reduced to 1 pixel per cycle due to bandwidth requirements.

The vertical scaling circuit receives pixel data from the vertical peaking circuit at a rate of 1 pixel per cycle into 3 lines of a 7-line buffer, each buffer line also having a length adequate for storing the data corresponding to 128 pixels_ Pixel latency time is 384 cycles. Along with the vertical peaking circuit buffer pixel latency time of 128 cycles, total vertical signal processing pixel latency time is 512 cycles. Vertical scaling operations use a 6-tap, 64 phase polyphase filter. The polyphase filter processes 6 lines of pixel data, 3 lines holding circuit input data and 3 lines holding data from mirroring operations. Any phase change is determined by the location of output pixels for various scaling ratios. Processed pixel data is output from the vertical scaling circuit at a rate of 1 pixel per cycle.

Synchronization signals are used between control logic for the vertical peaking circuit and control logic for the vertical scaling circuit to coordinate data transfer between the circuits and prevent overriding preceding pixel data. The interconnection between the two functional units raises synchronization problems. Frequent update requests and long input stall times occur due to variable scaling ratios.

With an ongoing demand to increase throughput, there is a need for a pixel-data processing circuit and method that further minimizes circuit real estate requirements and address the aforementioned problems, as well as other related problems. The present invention is directed to a circuit and method for performing the above-mentioned video-signal processing operations while decreasing the amount and types of circuits required to implement pixel-data peaking, scaling and other types of pixel-data processing.

A polyphase filter performing vertical peaking is also known from WO 01/45389, and US 6,281,873 describes a polyphase filter performing both scaling and filtering.

SUMMARY OF THE INVENTION

The invention is defined in the claims, and various aspects of the present invention are directed to processing pixel data using line buffers for decoupling and a reconfigurable pixel-data processing circuit in which a convolution of peaking and scaling coefficients is used to generate a set of coefficients that permits a polyphase filter to perform peaking and scaling functions in one operation.

Consistent with one specific example embodiment, the present invention is directed to a pixel-data processing circuit comprising: a vertical processing circuit that has a polyphase filter and a line-buffer circuit, and a logic circuit that causes the vertical processing circuit to choose between modes of operation including one mode in which the vertical processing circuit performs peaking and scaling functions concurrently by using a first set of coefficients, the first set of coefficients resulting from a convolution of peaking filter coefficients with scaling filter coefficients.

In another particular example embodiment, a vertical signal processing circuit includes a buffer and a polyphase filter and is adapted to simultaneously process vertical peaking and vertical scaling on pixel data in a first operational mode. In a first operational mode for vertical peaking and scaling, the embodiment includes receiving pixel data at a first rate, circulating the data in line buffers and filtering the circulated data through a polyphase filter configured with coefficients derived by convolving peaking filter coefficients with scaling polyphase filter coefficients, and presenting processed pixel data for storage at a second, different pixel rate. Using a control circuit, the pixel-data processing circuit can switch between operational modes by setting different coefficients for the polyphase filter circuit.

In one particular vertical signal processing embodiment, pixels are received at a rate of two pixels per cycle and output to a storage unit at one pixel per cycle. Other example embodiments of the present invention are respectively directed to various other related aspects including method, circuit, and system-based implementations of such processing.

The above summary of the present invention is not intended to describe each illustrated embodiment or every implementation of the present invention. The figures and the detailed description that follow more particularly exemplify these embodiments.

BRIEF DESCRIPTION OF THE DRAWINGS

The invention may be more completely understood in consideration of the following detailed description of various embodiments of the invention in connection with the accompanying drawings, in which:

FIG. 1 is a diagram of a conventional pixel-data processing circuit having a discrete vertical peaking and vertical scaling units arranged in cascade;
FIG. 2A-C are diagrams illustrating an equivalent representation of cascade filters according to the present invention;
FIGs. 3A-D are diagrams of example embodiments of coefficient tables for a polyphase filter according to the present invention; and
FIG. 4 is a diagram showing one example embodiment of a pixel-data processing circuit having a polyphase filter combining peaking and scaling according to the present invention.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention as defined by the appended claims.

DETAILED DESCRIPTION OF VARIOUS EXAMPLE EMBODIMENTS

The present invention is believed to be highly applicable to methods and arrangements for vertical pixel-data processing, and in applications that would typically use vertical peaking and vertical scaling units arranged in cascade. The invention has been found to be particularly advantageous for pixel processing arrangements requiring or benefiting from use of the same line-buffers and filter to implement in combination, several previously discrete operational functions including both pixel-data vertical peaking and vertical scaling. While the present invention is not necessarily limited to such applications, an appreciation of various aspects of the invention is best gained through a discussion of examples in such an environment.

Consistent with a general embodiment, the present invention is implemented in the form of a data processing circuit having a data-manipulation circuit and a line-buffer circuit that are used for applications such as scan-rate conversion where a typical frame rate, e.g., 50-60 frames per second, is increased for resizing and other purposes. The data processing circuit receives data to be processed at a first rate while outputting data at a second rate, the second rate being different than the first rate.

The processing circuit includes a data-manipulation circuit and a line-buffer circuit. The processing circuit has a first operational mode in which data is received by the line-buffer circuit at a first rate and circulated through the line-buffer circuit, the circulated data being manipulated by the data-manipulation circuit configured to perform a first function defined by a first set of operating parameters, the processed data is then output for storage in a storage unit at the second rate. The first set of operating parameters are pre-determined from a convolution of a second set of operating parameters defining a second data-manipulation function and a third set of operating parameters defining a third data-manipulation function. Using the first set of operating parameters, the data-manipulation circuit is configured to perform the first and second functions simultaneously.

A logic circuit is used to cause the processing circuit to switch between the first operational mode and another operational mode in which the circulated data is manipulated by the data-manipulating circuit configured to perform another function that uses a different set of operating parameters, or coefficients. In one general embodiment, the second set of operating parameters are fixed and the third set of operating parameters are tunable.

According to another example embodiment of the present invention, the invention is directed to a method for using common line buffers and polyphase filter in a vertical processing unit in a first operational mode, the polyphase filter configured to simultaneously perform vertical peaking and scaling operations using the common buffer. Coefficients are pre-determined by convolving peaking filter coefficients with scaling polyphase filter coefficients. The vertical processing unit is operable in several additional modes, including several vertical scaling modes, and a data averaging mode by reconfiguring the polyphase filter to use different sets of additional coefficients available from a coefficient look-up table.

A particular implementation of the present invention employs a programmable processing circuit that is programmed to perform multiple modes of operation and to switch between the modes in response to an external command. The method of the present invention performs both vertical peaking and vertical scaling operations, conventionally accomplished discretely in a cascade circuit arrangement, without increasing the hardware cost and the design complexity, and uses a single line buffer for de-coupling the input rate of two pixels per cycle. A double buffering mechanism is performed at the vertical processing stage as well as the storage units. This implementation uses the vertical processing buffer for mirroring operations during peaking and scaling data-manipulations.

In one particular example embodiment of the present invention, a pixel-processing arrangement combines vertical peaking and scaling operations into a common circuit using a single hybrid polyphase filter and line buffer circuit. Vertical peaking filter and vertical scaling filter functionalities are integrated into a single polyphase filter function using coefficients determined by performing a convolution on the desired peaking filtering coefficients with the desired polyphase (i.e., scaling) filter coefficients. Conventionally, a 3-tap filter is used in vertical peaking operations and a 6-tap polyphase filter is used uniquely in vertical scaling operations. In the circuit arrangement of the present invention, vertical peaking filtering operation is integrated into one larger (8-tap) polyphase filter, defined by coefficients resulting from the convolution of peaking (3-tap) filter coefficients and scaling (6-tap) polyphase filter coefficients in a software application.

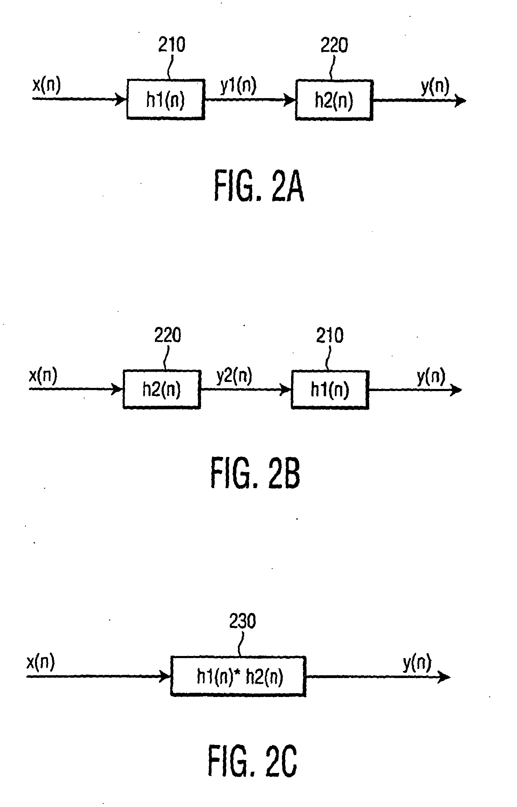

FIGs. 2A-2C illustrate an equivalent representation of cascade filters. FIG. 2A shows a first filter 210 having an impulse response h1(n) is coupled to a second filter 220 having an impulse response h2(n), filter 220 following filter 210 in the cascade arrangement. Filter impulse responses are defined, for example, by a set of coefficients for a particular filter construction. An input x(n) applied to filter 210 produces first intermediate response y1(n). Applying y1(n) to filter 220 produces output y(n). FIG. 2B shows a first filter 210 having an impulse response h1(n) is coupled to a second filter 220 having an impulse response h2(n), filter 210 follows filter 220 in this cascade arrangement. Input x(n) applied to filter 220 produces second intermediate response y2(n). Applying y2(n) to filter 210 again produces output y(n).

For the linear, time-invariant filters of FIG. 2A-C:

$$y1(n) = x(n) * h1(n)$$

therefore:

$$y(n) = y1(n) * h2(n) = [ x(n) * h1(n) ] * h2(n) = x(n) * [ h1(n) * h2(n) ]$$

FIG. 2C shows a hybrid filter 230 having an impulse response h1(n) * h2(n). Input x(n) applied to hybrid filter 230 produces output response y(n) directly.

In the present invention, peaking coefficients (*e.g.*, h1(n)) and scaling coefficients (*e.g.*, h2(n)) are combined through a convolution performed for each phase of scaling and peaking filter impulse responses.

$$H_{newscale(p)}(n) = \sum_{k=-\infty}^{\infty} H_{peak}(k) H_{scale(p)}(n-k)$$

where "p" is the phase selected for any given pixel processing by the vertical processing arrangement. Assuming a peaking coefficient length of 3 (conventionally, a 3-tap filter is used for peaking operations), and a scaling coefficient length of 6 (conventionally, a 6-tap polyphase filter is used for scaling operations), the length after convolution is 3+6-1, or 8. Therefore, an 8-tap filter is used in the vertical processing arrangements of the present invention to perform both vertical peaking and vertical scaling operations.

A single polyphase filter is configurable to perform various functions, the configuration being defined by a set of coefficients. Sets of coefficients are held in a coefficient table, the table enabling relational look-up operations.

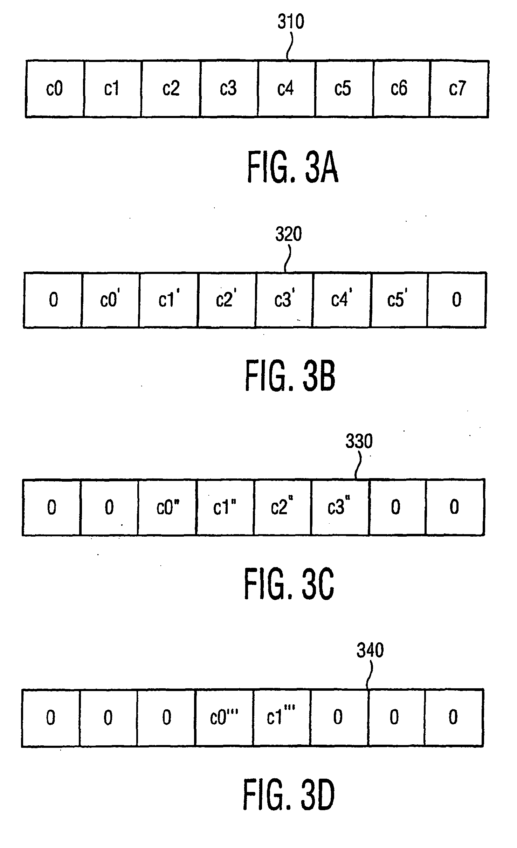

FIG. 3A illustrates one example embodiment of an 8-tap table 310 holding a coefficient set to configure an 8-tap polyphase filter to perform peaking and scaling operations. As previously discussed, a convolution of vertical peaking filter coefficients and vertical scaling filter coefficients is performed to determine the combined peaking and scaling coefficients, c0 - c7 respectively.

FIG. 3B shows another example embodiment of an 8-tap table 320 containing a coefficient set, comprising coefficients c0' - c5', to configure an 8-tap polyphase filter to perform a 6-tap scaling operation. Table 320 contains 2 zero coefficients in addition to coefficients c0' - c5' filling out the 8-tap table, one zero coefficient at each end. In an alternative embodiment, table 320 contains coefficients defining a 6-tap combined peaking and scaling filter, determined by convolution of 3-tap peaking filter coefficients and 4-tap scaling filter coefficients (3+4-1=6).

FIG. 3C shows another example embodiment of an 8-tap table 330 containing a coefficient set, comprising coefficients c0" - c3", to configure an 8-tap polyphase filter to perform a 4-tap scaling operation. Table 330 contains 4 zero coefficients in addition to coefficients c0" - c3" filling out the 8-tap table, two zero coefficients at each end.

FIG. 3D shows yet another example embodiment of an 8-tap table 340 containing a coefficient set, comprising coefficients c0"'- c1"', to configure an 8-tap polyphase filter to perform a 2-tap averaging operation. Table 340 contains 6 zero coefficients in addition to coefficients c0"' - c1"' filling out the 8-tap table, three zero coefficients at each end.

In a further embodiment of the present invention addresses the situations in which the sum of each phase convolution product might not be uniform, *e.g.*, due to fixed point arithmetic operation round-off errors. For this case, coefficients are normalized and scaled-up before loading. Rounding error of the normalization is reduced by comparing the uniform value 256 for 8 bits or 512 for 9 bits, adding the difference back to the highest value coefficient to compensate for variance and to reduce the discontinuity of filter results in a vertical image intensity.

The combination circuit arrangement simplifies design and verification, and is implemented using less "real estate" than discrete vertical peaking and vertical scaling circuits. Furthermore, the combined circuit arrangement of the present invention eliminates intermediate stall and synchronization control between circuit blocks, along with associated design complexity and hardware cost. Pipe stages are reduced and the resolution of filter products (*i.e.*, output data) is retained. Overall functionality of the single-stage vertical signal processing circuit arrangement of the present invention is unchanged from the overall functionality of the dual-stage conventional circuit, however, total (buffer-induced) pixel data latency time is reduced by half to 256 cycles.

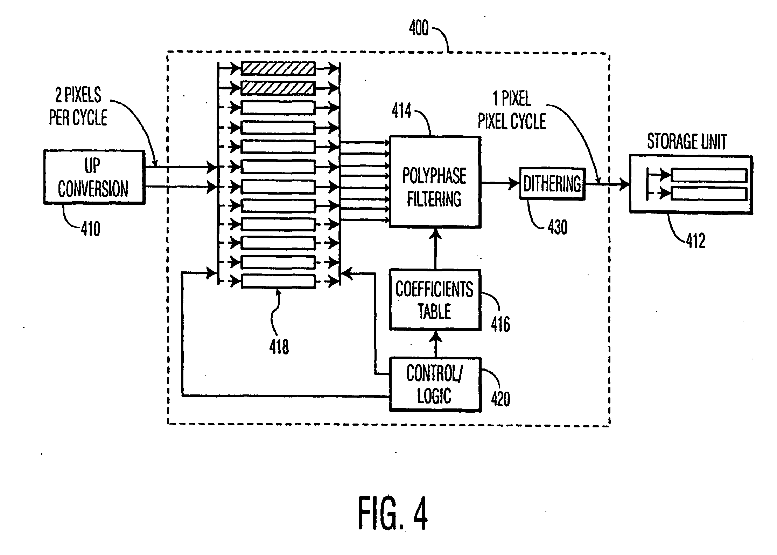

Consistent with the above-described circuit arrangement and method, FIG. 4 illustrates processing blocks arranged and configured to process pixel data in a vertical processing unit 400 operating in one of two modes. For the throughput of the vertical processing unit 400, the input rate for vertical processing is two pixels per cycle and the output rate is one pixel per cycle due to an up conversion unit 410 always outputting two pixels in one cycle. The up conversion unit outputs two pixels in the vertical direction. In order to receive the pixels, vertical processing unit uses a buffers having 2 lines (shaded). Further, in this particular implementation, the length of each line buffer is adequate for storing the data corresponding to 128 pixels.

In a more particular example embodiment, vertical processing is implemented to perform vertical linear or non-linear sampling for a video signal input, and an 8-tap, 64-phase polyphase filter is used for vertical peaking and vertical scaling (*e.g.*, expansion and compression) operations. Data is circulated in the line buffer of the vertical processing unit depending on the peaking function, scaling factor and geometrical position of output sampling pixels. In this regard, the polyphase filter is adapted to filter the same pixels during each of peaking and/or scaling (*i.e.*, expansion) operations. During a compression operation, some lines of pixels can be skipped. The buffer is used in part, for de-coupling the input rate of incoming pixels for the filtering operations.

In FIG. 4, vertical processing unit 400 produces processed pixel data at a rate of one pixel per cycle for storage in a memory (or storage unit) 412. The vertical processing unit 400 includes a polyphase filter having filtering stage 414 and coefficients table 416, a line-buffer circuit 418 including twelve line buffers and control circuitry 420. Control circuitry 420, which is implemented as logic or as a software routine for a programmable processor, is adapted to circulate pixel data through the line-buffer circuit for combined vertical peaking and scaling operations using a polyphase filter where the circulation of data through the line buffers depends on a scaling factor. In this manner, the vertical processing circuit receives the pixel data at two pixels per cycle, performs peaking and scaling operations simultaneously, and then outputs the processed pixel data for storage in the storage unit at a rate of one pixel per cycle.

The circuitry 420 also includes logic that is configured and arranged to cause the vertical processing circuit to switch between a first (*i.e.*, combined peaking and scaling) operation mode and an Nth (*e.g.*, scaling only or averaging) operational modes. Via programming or another external prompt, the circuitry 420 re-configures the operation of the polyphase filter (414 and 416 of FIG. 4), for example by changing filter coefficients, and controls the line-buffer circuit 418 so that the received pixel data is double-buffered in the line-buffer circuit 418 using two of the line buffers and mirroring data is synchronized for processing appropriately.

An optional dithering circuit 430 is used when the application requires, to dither the data from nine bits to eight bits before the data is presented to the storage unit 412.

Accordingly, various embodiments have been described as example implementations of the present invention for saving hardware and offsetting complexity in pixel-data processing applications. In various implementations of the present invention, the number of line buffers required is reduced significantly, there is no extra cost in terms of hardware or design complexity, and throughput is not adversely affected by the combined polyphase filtering operation.

**Claims**

1. A pixel-data processing arrangement, comprising:

   - a vertical processing circuit (400) including a polyphase filter (414) and a line-buffer circuit, the vertical processing circuit adapted to receive and circulate said pixel data through the line-buffer circuit and from the line-buffer circuit to the polyphase filter, the polyphase filter being adapted to filter the pixel data, and **characterised in that** the polyphase filter is adapted to perform peaking and scaling functions concurrently by using a first set of coefficients resulting from a convolution of peaking filter coefficients with scaling filter coefficients; and **in that** the pixel-data processing arrangement comprises:
   - a logic circuit (420) adapted to cause the vertical processing circuit to operate in a first operational mode in which the filtered data is processed by using the first set of coefficients and circulating the filtered data through the line-buffer circuit and to switch between the first operational mode and a second operational mode in which the vertical processing circuit performs another function by using a set of coefficients that is different than the first set of coefficients.

2. The pixel-data processing arrangement of claim 1, further including a storage unit (418) adapted to receive and store processed pixel data, and wherein in the first operational mode the vertical processing circuit receives the pixel data at a first rate and outputs the processed pixel data for storage in the storage unit at a second pixel rate, the second pixel rate being different than the first pixel rate.

3. The pixel-data processing arrangement of claim 2, wherein the first pixel rate (410) is faster than the second pixel rate (430).

4. The pixel-data processing arrangement of claim 1, wherein the other function performed by the vertical processing circuit is an N-taps scaling function, where N is an integer greater than 2.

5. The pixel-data processing arrangement of claim 1, wherein the other function performed by the vertical processing circuit is an N-taps averaging-filter function in which pixels neighboring a current pixel are averaged and where N is an integer greater than 2.

**6.** The pixel-data processing arrangement of claim 1, wherein the first set of coefficients results from a convolution of 3 taps of peaking filter coefficients with 4 taps of scaling filter coefficients.

**7.** A method for pixel-data processing, comprising:

- vertical processing said pixel-data including
- buffering lines of said pixel data and, in response,
- polyphase filtering the buffered pixel data,
- receiving and circulating the pixel data for further buffering, and the polyphase filtering including peaking and scaling functions concurrently by using a first set of coefficients, the first set of coefficients resulting from a convolution of peaking filter coefficients with scaling filter coefficients; and
- causing the vertical processing to operate in a first operational mode in which the filtered data is processed by using the first set of coefficients and circulating the filtered data, and to switch between the first operational mode and a second operational mode in which the vertical processing includes performing another function by using a set of coefficients that is different than the first set of coefficients.

**8.** The method of claim 7, wherein the first set of coefficients results from a convolution of M taps of peaking filter coefficients with N taps of scaling filter coefficients, and further including selecting the other function as one of: an N-taps scaling function, and an N-taps averaging-filter function in which pixels neighboring a current pixel are averaged, where each of M and N is an integer greater than 2.

**Patentansprüche**

**1.** Pixeldatenverarbeitungsanordnung, umfassend:

eine vertikale Verarbeitungsschaltung (400), die ein Polyphasenfilter (414) und eine Zeilenpufferschaltung enthält, wobei die vertikale Verarbeitungsschaltung dafür ausgelegt ist, die Pixeldaten über die Zeilenpufferschaltung und von der Zeilenpufferschaltung zum Polyphasenfilter zu empfangen und in Umlauf zu bringen, wobei das Polyphasenfilter dafür ausgelegt ist, die Pixeldaten zu filtern, **dadurch gekennzeichnet, dass** das Polyphasenfilter dafür ausgelegt ist, Anhebungs- und Skalierungsfunktionen gleichzeitig durchzuführen, indem es einen ersten Satz von Koeffizienten resultierend aus einer Faltung von Anhebungsfilterkoeffizienten mit Skalierungsfilterkoeffizienten verwendet; und dass die Pixeldatenverarbeitungsanordnung umfasst:

eine Logikschaltung (420), die dafür ausgelegt ist, die vertikale Verarbeitungsschaltung zu veranlassen, in einem ersten Betriebsmodus zu arbeiten, in welchem die gefilterten Daten unter Verwendung des ersten Satzes von Koeffizienten verarbeitet werden und die gefilterten Daten durch die Zeilenpufferschaltung in Umlauf gebracht werden, und zwischen dem ersten Betriebsmodus und einem zweiten Betriebsmodus umzuschalten, in welchem die vertikale Verarbeitungsschaltung eine weitere Funktion ausführt, indem sie einen Satz von Koeffizienten verwendet, der von dem ersten Satz von Koeffizienten verschieden ist.

**2.** Pixeldatenverarbeitungsanordnung nach Anspruch 1, die ferner eine Speichereinheit (418) enthält, die dafür ausgelegt ist, verarbeitete Pixeldaten zu empfangen und zu speichern, wobei die vertikale Verarbeitungsschaltung im ersten Betriebsmodus die Pixeldaten mit einer ersten Rate empfängt und die verarbeiteten Pixeldaten zur Speicherung in der Speichereinheit mit einer zweiten Pixelrate ausgibt, wobei die zweite Pixelrate verschieden von der ersten Pixelrate ist.

**3.** Pixeldatenverarbeitungsanordnung nach Anspruch 2, wobei die erste Pixelrate (410) schneller ist als die zweite Pixelrate (430).

**4.** Pixeldatenverarbeitungsanordnung nach Anspruch 1, wobei die von der vertikalen Verarbeitungsschaltung ausgeführte andere Funktion eine N-Anzapfungen-Skalierungsfunktion ist, wobei N eine ganze Zahl größer als 2 ist.

**5.** Pixeldatenverarbeitungsanordnung nach Anspruch 1, wobei die von der vertikalen Verarbeitungsschaltung ausgeführte andere Funktion eine N-Anzapfungen-Mittelungsfilterfunktion ist, in der Pixel, die zu einem aktuellen Pixel benachbart sind, gemittelt werden, wobei N eine ganze Zahl größer als 2 ist.

**6.** Pixeldatenverarbeitungsanordnung nach Anspruch 1, wobei der erste Satz von Koeffizienten aus einer Faltung von drei Anzapfungen der Anhebungsfilterkoeffizienten mit vier Anzapfungen der Skalierungsfilterkoeffizienten resultiert.

7. Verfahren zur Pixeldatenverarbeitung, umfassend:

vertikale Verarbeitung der Pixeldaten, enthaltend:

- Puffern von Zeilen der Pixeldaten, und in Reaktion hierauf
- Polyphasenfilterung der gepufferten Pixeldaten,
- Empfangen und in Umlauf bringen der Pixeldaten für eine weitere Pufferung, wobei die Polyphasenfilterung Anhebungs- und Skalierungsfunktionen gleichzeitig unter Verwendung eines ersten Satzes von Koeffizienten umfasst, wobei der erste Satz von Koeffizienten aus einer Faltung von Anhebungsfilterkoeffizienten mit Skalierungsfilterkoeffizienten resultiert; und

Veranlassen der vertikalen Verarbeitung, in einem ersten Betriebsmodus zu arbeiten, in welchem die gefilterten Daten unter Verwendung des ersten Satzes von Koeffizienten verarbeitet werden und die gefilterten Daten in Umlauf gebracht werden, und zwischen dem ersten Betriebsmodus und einem zweiten Betriebsmodus umzuschalten, in welchen die vertikale Verarbeitung das Ausführen einer weiteren Funktion unter Verwendung eines Satzes von Koeffizienten, der vom ersten Satz von Koeffizienten verschieden ist, umfasst.

8. Verfahren nach Anspruch 7, wobei der erste Satz von Koeffizienten aus einer Faltung von M Anzapfungen von Anhebungsfilterkoeffizienten mit N Anzapfungen von Skalierungsfilterkoeffizienten resultiert, wobei das Verfahren ferner das Auswählen der anderen Funktion enthält als eine von: einer N-Anzapfungen-Skalierungsfunktion und einer N-Anzapfungen-Mittelungsfilterfunktion, in der Pixel, die zu einem aktuellen Pixel benachbart sind, gemittelt werden, wobei jeweils M und N eine ganze Zahl größer als 2 sind.

## Revendications

1. Dispositif de traitement de données de pixels, comprenant :

- un circuit de traitement vertical (400) comportant un filtre polyphasé (414) et un circuit tampon en ligne, le circuit de traitement vertical étant adapté pour recevoir et faire circuler lesdites données de pixels à travers le circuit tampon en ligne et du circuit tampon en ligne vers le filtre polyphasé, le filtre polyphasé étant adapté pour filtrer les données de pixels, et

caractérisé en ce que le filtre polyphasé est adapté pour exécuter des fonctions de compensation et de mise à l'échelle simultanément en utilisant un premier ensemble de coefficients résultant d'une convolution des coefficients de filtre de compensation avec les coefficients de filtre de mise à l'échelle ; et en ce que le dispositif de traitement de données de pixels comprend :

- un circuit logique (420) adapté en vue d'entraîner le circuit de traitement vertical à agir dans un premier mode opérationnel dans lequel les données filtrées sont traitées en utilisant le premier ensemble de coefficients et en faisant circuler les données filtrées à travers le circuit de tampon en ligne et en vue de commuter entre le premier mode opérationnel et un second mode opérationnel dans lequel le circuit de traitement vertical exécute une autre fonction en utilisant un ensemble de coefficients qui est différent du premier ensemble de coefficients.

2. Dispositif de traitement de données de pixels selon la revendication 1, comprenant, de plus, une unité de stockage (418) adaptée pour recevoir et stocker des données de pixels traitées, et dans lequel dans le premier mode opérationnel, le circuit de traitement vertical reçoit les données de pixels suivant un premier débit et délivre les données de pixels traitées en vue d'un stockage dans l'unité de stockage à un second débit de pixels, le second débit de pixels étant différent du premier débit de pixels.

3. Dispositif de traitement de données de pixels selon la revendication 2, dans lequel le premier débit de pixels (410) est plus rapide que le second débit de pixels (430).

4. Dispositif de traitement de données de pixels selon la revendication 1, dans lequel l'autre fonction exécutée par le circuit de traitement vertical est une fonction de mise à l'échelle de N prises, où N représente un nombre entier supérieur à 2.

**5.** Dispositif de traitement de données de pixels selon la revendication 1, dans lequel l'autre fonction exécutée par le circuit de traitement vertical est une fonction de filtre intégrateur à N prises dans laquelle des pixels se trouvant au voisinage d'un pixel courant sont moyennés et dans lequel N représente un entier supérieur à 2.

**6.** Dispositif de traitement de données de pixels selon la revendication 1, dans lequel le premier ensemble de coefficients résulte d'une convolution de 3 prises de coefficients de filtre de compensation avec 4 prises de coefficients de filtre de mise à l'échelle.

**7.** Procédé pour traiter des données de pixels consistant à :

- un traitement vertical desdites données de pixels incluant de :
- tamponner des lignes desdites données de pixels et, en réponse,
- filtrer en filtre polyphasé les données de pixels tamponnées,
- recevoir et mettre en circulation les données de pixels pour tamponner encore, et le filtrage polyphasé incluant des fonctions de compensation et de mise à l'échelle simultanément en utilisant un premier ensemble de coefficients, le premier ensemble de coefficients résultant d'une convolution des coefficients de filtre de compensation avec les coefficients de filtre de mise à l'échelle ; et
- entraîner le traitement vertical à fonctionner dans un premier mode opérationnel dans lequel les données filtrées sont traitées en utilisant le premier ensemble de coefficients et en faisant circuler les données filtrées, et à commuter entre le premier mode opérationnel et un second mode opérationnel dans lequel le traitement vertical inclut d'exécuter une autre fonction en utilisant un ensemble de coefficients qui est différent du premier ensemble de coefficients.

**8.** Procédé selon la revendication 7, dans lequel le premier ensemble de coefficients résulte d'une convolution de M prises de coefficients du filtre de compensation avec N prises de coefficients du filtre de mise à l'échelle, et comporte, de plus, de sélectionner l'autre fonction comme étant l'une : d'une fonction de mise à l'échelle à N prises et d'une fonction de filtre intégrateur à N prises dans laquelle des pixels avoisinant un pixel courant sont moyennés, où chacun de M et N est un nombre entier supérieur à 2.

FIG. 1

210

x(n) ⟶ | h1(n) | y1(n) ⟶ | h2(n) | y(n) ⟶

220

## FIG. 2A

220

x(n) ⟶ | h2(n) | y2(n) ⟶ | h1(n) | y(n) ⟶

210

## FIG. 2B

230

x(n) ⟶ | h1(n)* h2(n) | y(n) ⟶

## FIG. 2C

310

| c0 | c1 | c2 | c3 | c4 | c5 | c6 | c7 |
|----|----|----|----|----|----|----|----|

## FIG. 3A

320

| 0 | c0' | c1' | c2' | c3' | c4' | c5' | 0 |
|---|-----|-----|-----|-----|-----|-----|---|

## FIG. 3B

330

| 0 | 0 | c0" | c1" | c2" | c3" | 0 | 0 |
|---|---|-----|-----|-----|-----|---|---|

## FIG. 3C

340

| 0 | 0 | 0 | c0''' | c1''' | 0 | 0 | 0 |
|---|---|---|-------|-------|---|---|---|

## FIG. 3D

FIG. 4

**EP 1 442 591 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5422827 A
- WO 0145389 A
- US 6281873 B